# EUROPÄISCHE PATENTSCHRIFT

(11) **EP 0 451 728 B1**
(45) Veröffentlichungstag und Bekanntmachung des Hinweises auf die Patenterteilung: **08.09.1993**
(21) Anmeldenummer: 91105434.4
(22) Anmeldetag: 05.04.1991
(51) Int. Cl.: F16D 55/227

(54) **Teilbelag-Scheibenbremse für Kraftfahrzeuge**
Spot-type disc brake for motor vehicles
Frein à disque à garniture partielle pour véhicules automobiles

(30) Priorität: 05.04.1990 DE 9003990 U
(43) Veröffentlichungstag der Anmeldung: 16.10.1991
(73) Patentinhaber: LUCAS INDUSTRIES PUBLIC LIMITED COMPANY, Solihull, West Midlands B91 3TX (GB)
(72) Erfinder: Heibel, Helmut, W-5431 Moschheim (DE)
(74) Vertreter: Goetz, Rupert, Dipl.-Ing.

(56) Entgegenhaltungen:
- EP-A- 0 046 432
- EP-A- 0 229 618
- WO-A-87/03349
- DE-A- 1 948 866
- DE-A- 2 211 429
- US-A- 3 374 866

## Beschreibung

Die Erfindung betrifft eine Teilbelag-Scheibenbremse für Kraftfahrzeuge mit
- einem Bremsträger, der einen Rand einer Bremsscheibe umgreift,
- einem Schlitten, der an einer ersten Seite der Bremsscheibe mittels eines ersten Paars Führungen in Achsrichtung der Bremsscheibe verschiebbar am Bremsträger geführt ist und ein erstes Teil einer hydraulischen Betätigungsvorrichtung trägt,
- einem Schwimmsattel, der die Bremsscheibe und den Schlitten übergreift, auf der ersten Seite der Bremsscheibe mittels eines zweiten Teils der Betätigungsvorrichtung an deren erstem Teil in Achsrichtung der Bremsscheibe verschiebbar geführt ist und an der vom Schlitten abgewandten, zweiten Seite der Bremsscheibe mittels eines zweiten Paars Führungen am Bremsträger verschiebbar geführt ist,
- einer ersten Bremsbacke, die am Schlitten befestigt ist und durch dessen Verschiebung an die erste Seite der Bremsscheibe anpreßbar ist, sowie
- einer zweiten Bremsbacke, die am Schwimmsattel befestigt ist und durch dessen Verschiebung an die zweite Seite der Bremsscheibe anpreßbar ist,
- wobei die Führungen des zweiten Paars je einen Stift aufweisen, der sich quer zur Achsrichtung der Bremsscheibe erstreckt und in eine in Achsrichtung der Bremsscheibe verlaufende Nut eingreift.

Bei einer bekannten Teilbelag-Scheibenbremse dieser Gattung (EP-A 0229618) weisen die Führungen beider Paare je einen Stift auf, der am Bremsträger befestigt ist und in eine in Achsrichtung der Bremsscheibe verlaufende Nut eingreift. Die Nuten des ersten Paars Führungen sind am Schlitten ausgebildet, während die Nuten des zweiten Paars Führungen an einem axial außerhalb der Bremsscheibe angeordneten Teil des Schwimmsattels ausgebildet sind. Diese Anordnung der Stifte am Bremsträger hat den Vorteil, daß die beim Bremsen an den Bremsbacken auftretenden Bremskräfte in bezug auf den Bremsträger immer die gleichen, vom Verschleißzustand der Bremsbacken unabhängigen Hebelarme haben. Die beim Bremsen auftretenden Momente, die bestrebt sind, den Schlitten und den Schwimmsattel zu verkanten und den Bremsträger zu verwinden, sind deshalb bei gegebener Betätigungskraft konstant und lassen sich durch Einstellen eines bestimmten Spiels zwischen den Stiften und den zugehörigen Nuten derart berücksichtigen, daß Schlitten und Schwimmsattel unter allen Umständen leicht verschiebbar sind. Dabei muß allerdings in Kauf genommen werden, daß bei schneller Fahrt über Fahrbahnen mit starken Unebenheiten Klappergeräusche auftreten können, die durch das Führungsspiel bedingt sind.

Der Erfindung liegt die Aufgabe zugrunde, solchen Klappergeräuschen mit einfachen, die Verschiebbarkeit der genannten Bauteile nicht nennenswert behindernden Maßnahmen zu vermindern und möglichst ganz zu vermeiden.

Die Aufgabe ist erfindungsgemäß ausgehend von einer Teilbelag-Scheibenbremse der eingangs beschriebenen Gattung dadurch gelöst, daß das erste Paar Führungen zwei Bolzen aufweist, die sich in Achsrichtung der Bremsscheibe erstrecken, mit radialem Spiel in je eine Führungsbohrung eingreifen und in dieser durch je eine Ringstütze aus elastischem Werkstoff zentriert sind, deren axiale Breite nicht größer als der Durchmesser des zugehörigen Bolzens ist.

Die Führungen des ersten Paars liegen dem Gesamtschwerpunkt der aus dem Schlitten, dem Schwimmsattel und den beiden Bremsbacken bestehenden Baugruppe auf jeden Fall näher als die Führungen des zweiten Paars. Deshalb werden Massenträgheitskräfte, die an dieser Baugruppe beim Überfahren von Fahrbahnunebenheiten auftreten, zum bei weitem überwiegenden Teil, wenn nicht ausschließlich, über die Führungen des ersten Paars auf den Bremsträger übertragen. Diese Führungen sind dank der elastischen Ringstützen spielfrei, so daß dort unter normalen Umständen kein Klappergeräusch auftreten kann. Zwischen den Stiften und Nuten der Führungen des zweiten Paars finden bei Erschütterungen höchstens geringfügige Relativbewegungen statt, und wenn dabei die Stifte überhaupt an die Wände der zugehörigen Nut anstoßen, dann geschieht dies mit so geringer Kraft, daß dadurch normalerweise kein hörbares Geräusch erzeugt wird.

Bei der erfindungsgemäßen Bremse widersetzen sich die Führungen des ersten Paars jeglicher Schrägstellung der aus dem Schlitten, dem Schwimmsattel und den beiden Bremsbacken bestehenden Baugruppe. Sollte aber bei besonders kräftigem Bremsen doch eine geringfügige Schrägstellung dieser Baugruppe vorkommen, dann wird durch die geringe axiale Breite der elastischen Ringstützen jedenfalls vermieden, daß sich der Widerstand des Schlittens gegen axiale Verschiebung nennenswert erhöht. Das radiale Spiel der Bolzen in den Führungsbohrungen und die Zentrierung der Bolzen durch je eine schmale Ringstütze verhindern nämlich, daß die Bolzen sich in den Führungsbohrungen verkanten können.

Es sind zwar Teilbelag-Scheibenbremsen bekannt (DE-A 1948866 und US-A 3374866), bei denen an einem Bremsträger achsparallele Bolzen ausgebildet sind, die sich mit radialem Spiel durch Führungsbohrungen in einem Schwimmsattel erstrecken und in diesen durch elastische Ringe zentriert sind. Die Ringe sind jedoch paarweise in einem solchen Abstand voneinander angeordnet, daß die axiale Breite jeder von einem solchen Paar Ringe gebildeten Ringstütze merklich größer ist als der Durchmesser des zugehörigen Bolzens. Entsprechendes gilt auch für eine andere bekannte Teilbelag-Scheibenbremse (DE-A 2211429), bei der am Schwimmsattel achsparallele Bolzen befestigt sind, die sich mit radialem Spiel durch je eine Führungsbohrung im Bremsträger erstrecken und in dieser durch je eine elastische Ringstütze zentriert sind. All diese bekannten Teilbelag-Scheibenbremsen haben im übrigen kein Bauteil, das mit einem Schlitten einer Scheibenbremse der eingangs beschriebenen Gattung vergleichbar wäre; auch fehlt ihnen das Merkmal, daß der Schwimmsattel axial außerhalb der Bremsscheibe durch ein zweites Paar Führungen mit je einem sich quer zur Achsrichtung der Bremsscheibe erstreckenden Stift und je einer in Achsrichtung der Bremsscheibe verlaufenden Nut geführt ist.

Die erfindungsgemäße Scheibenbremse ist vorzugsweise dadurch weitergebildet, daß die Ringstützen des ersten Paars Führungen mindestens annähernd in derselben zur Achse der Bremsscheibe normalen Ebene liegen wie der Gesamtschwerpunkt der von dem Schlitten, Schwimmsattel und den beiden Bremsbacken gebildeten Baugruppe. Bei dieser Weiterbildung werden Massenträgheitskräfte, die an dieser Baugruppe infolge von Fahrbahnunebenheiten auftreten, vollständig über die elastischen Ringstützen auf den Bremsträger übertragen, so daß die axial außerhalb der Bremsscheibe angeordneten Führungen des zweiten Paars von solchen Massenträgheitskräften vollständig freigehalten werden.

Erfindungsgemäß ist es ferner vorteilhaft, wenn die Bolzen des ersten Paars Führungen am Schlitten befestigt sind und die zugehörigen Führungsbohrungen am Bremsträger ausgebildet sind und Ringnuten aufweisen, in denen die Ringstützen aufgenommen sind. Dadurch bleibt der Vorteil der bekannten Scheibenbremse der eingangs beschriebenen Gattung erhalten, daß jeder der an den beiden Bremsbacken auftretenden Bremskräfte in bezug auf die zugehörigen Führungen unabhängig vom Abnutzungszustand der betreffenden Bremsbacke stets den gleichen Hebelarm hat.

Es ist ferner vorteilhaft, wenn die Ringstützen des ersten Paars Führungen zylindrisch sind und eine axiale Breite haben, die 40 bis 50% des Durchmessers des zugehörigen Bolzens beträgt.

Außerdem ist es zweckmäßig, wenn die Ringstützen des ersten Paars Führungen eine radiale Dicke haben, die 60 bis 80% ihrer axialen Breite beträgt.

Jede der Ringstützen kann aus einem einzigen elastischen Ring bestehen, der zweckmäßigerweise die vorstehend genannten Maßverhältnisse einhält. Es ist aber auch möglich, daß mindestens eine der Ringstützen aus mindestens zwei schmalen Ringen zusammengesetzt ist, die mit axialen Zwischenräumen nebeneinander angeordnet sind. Dabei ist vorausgesetzt, daß die axiale Gesamtbreite einer solchen Ringanordnung nicht größer als der Durchmesser des zugehörigen Bolzens ist.

Besonders vorteilhaft ist, wenn die Maße und Elastizität der Ringstützen derart gewählt sind, daß die Ringstützen bei Belastung durch Bremskräfte mindestens annähernd die gleiche Kraft-Weg-Charakteristik haben wie der Bremsträger im Bereich jeder der Führungen des zweiten Paars. Damit wird erreicht, daß die Abstützung beider Bremsbacken gegen die beim Bremsen auftretenden Umfangskräfte im wesentlichen gleiche Federkonstanten aufweisen; mit anderen Worten wird die Tatsache ausgeglichen, daß der Bremsträger sich in dem axial äußeren Bereich, in dem er über den Schwimmsattel die Bremskraft der axial äußeren Bremsbacke aufnimmt, stärker verformt als in dem axial inneren Bereich, in dem er über den Schlitten die Bremskraft der ersten Bremsbacke aufnimmt.

Es ist außerdem zweckmäßig, wenn die Führungsbohrungen des ersten Paars Führungen je einen engen Abschnitt haben, der sich von der zugehörigen elastischen Ringstütze in Richtung zur Bremsscheibe erstreckt und bei Überschreiten einer vorbestimmten normalen Bremskraft eine Anlagefläche für den zugehörigen Bolzen bildet. Dadurch läßt sich mit Sicherheit ausschließen, daß die elastischen Ringstützen bei extrem starkem Bremsen überlastet werden können.

Schließlich ist es vorteilhaft, wenn die Führungen sowie die Bremsbacken symmetrisch in bezug auf eine die Achse der Bremsscheibe enthaltende Mittelebene angeordnet sind und die Betätigungsvorrichtung gegen die Mittelebene in der Betriebsdrehrichtung der Bremsscheibe zur Auslaufseite der Bremse versetzt ist.

Ein Ausführungsbeispiel der Erfindung wird im folgenden anhand schematischer Zeichnungen mit weiteren Einzelheiten erläutert. Es zeigen:
- Fig. 1: eine Seitenansicht einer Teilbelag-Scheibenbremse,
- Fig. 2: die zugehörige Vorderansicht in Richtung des Pfeils II in Fig. 1,
- Fig. 3: den Schnitt III-III in Fig. 1,
- Fig. 4: den vergrößerten Ausschnitt IV in Fig. 3 und
- Fig. 5: den vergrößerten Ausschnitt V in Fig. 3.

Die dargestellte Scheibenbremse hat einen Bremsträger 10 mit einem Befestigungsteil 12, das beispielsweise an einem Achsschenkel eines Fahrzeugs zu befestigen ist, zwei Brückenteilen 14, die mit Abstand in Umfangsrichtung einer Bremsscheibe 16 angeordnet sind und sich über deren äußeren Rand hinwegerstrecken, sowie zwei Schenkeln 18, die von je einem der Brückenteile 14 aus axial außerhalb der Bremsscheibe 16 radial nach innen ragen und durch ein nicht dargestelltes, übliches Verbindungsteil miteinander verbunden sein können.

An der axial inneren Seite des Bremsträgers 10 ist ein Schlitten 20 angeordnet, an dessen von der Bremsscheibe 16 abgewandter Seite ein Kolben 22 einstückig ausgebildet ist, und an dessen der Bremsscheibe zugewandter Seite eine erste Bremsbacke 24 auswechselbar befestigt ist. Die Bremsbacke 24 hat eine Rückenplatte 26, die in eine Aussparung des Schlittens 20 eingelassen ist, sowie einen Bremsbelag 28.

Zwischen den beiden Brückenteilen 14 des Bremsträgers 10 ist ein Schwimmsattel 30 angeordnet, der die Bremsscheibe 16 und den Schlitten 20 übergreift. Der Schwimmsattel 30 hat einen hydraulischen Zylinder 32, der mit einem axial inneren Sattelteil 34 einstückig ausgebildet ist und zusammen mit dem Kolben 22 eine hydraulische Betätigungsvorrichtung bildet. Der Schwimmsattel 30 hat ferner ein mit dem axial inneren Sattelteil 34 fest verschraubtes axial äußeres Sattelteil 36, das sich über den äußeren Rand der Bremsscheibe 16 hinwegerstreckt und axial außerhalb von dieser einen radial nach innen ragenden Schenkel 38 aufweist, an dem eine zweite Bremsbacke 40 befestigt ist.

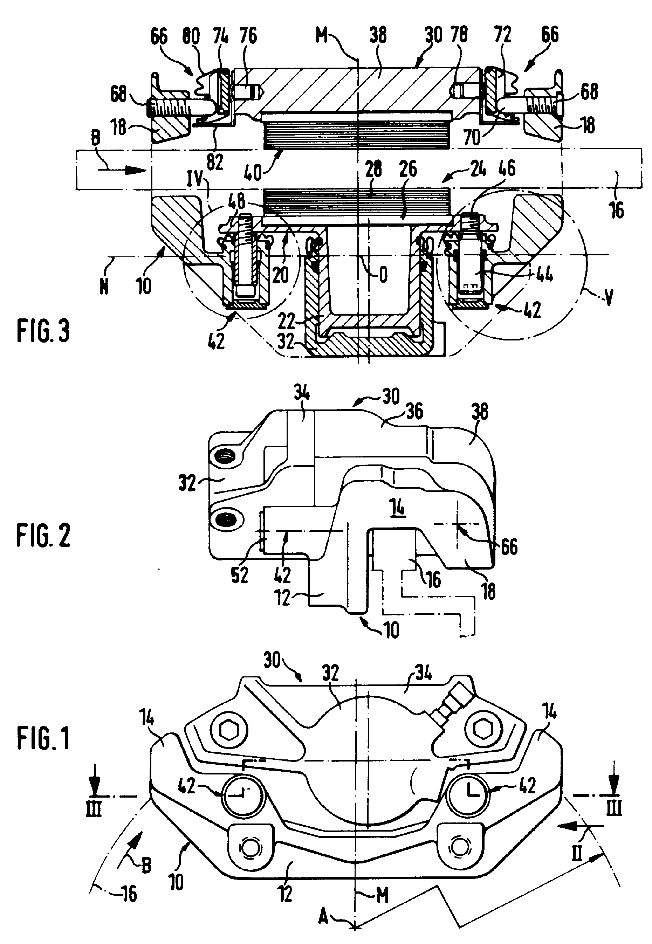

Die Bremsscheibe 16 dreht sich bei Vorwärtsfahrt des zugehörigen Kraftfahrzeugs um ihre Achse A im Sinne des Pfeils B in Fig. 1 und 3, der die Betriebsdrehrichtung kennzeichnet. Dabei ist die in Fig. 1 und 3 linke Seite der Bremse die Einlaufseite, während die rechte Seite die Auslaufseite ist. Der Bremsträger 10 sowie der Schlitten 20 und der Schwimmsattel 30 mit Ausnahme der hydraulischen Betätigungsvorrichtung 22, 32 sind symmetrisch in bezug auf eine die Achse A der Bremsscheibe 16 enthaltende Mittelebene M gestaltet und angeordnet. Die Betätigungsvorrichtung 22, 32 ist gegen die Mittelebene M in der Betriebsdrehrichtung B zur Auslaufseite der Bremse hin versetzt angeordnet.

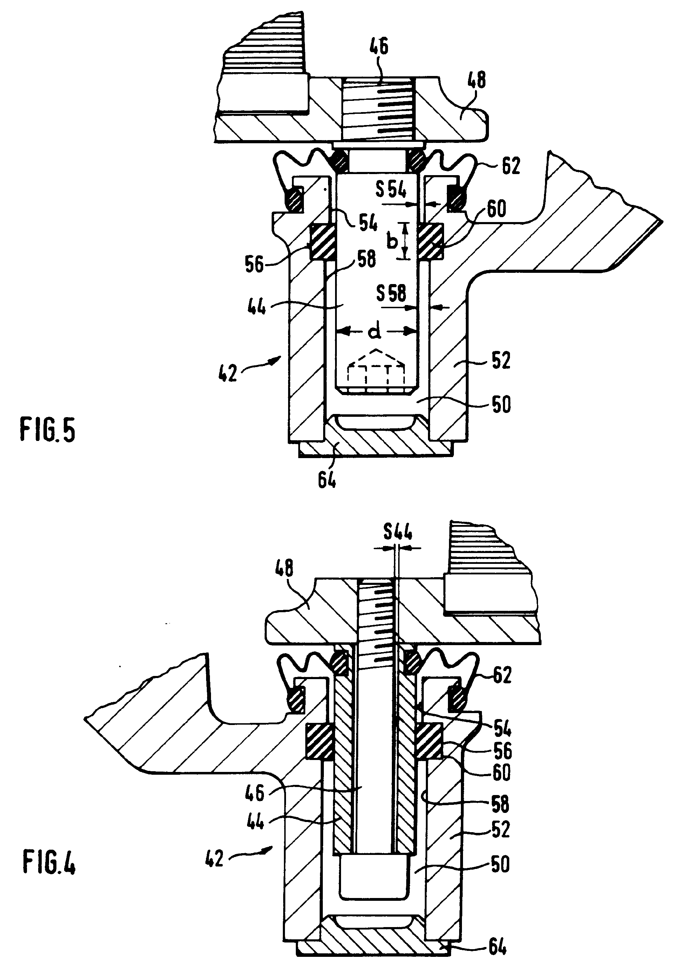

Der Schlitten 20 ist am Bremsträger 10 mit einem ersten Paar Führungen 42 geführt, die symmetrisch zur Mittelebene M angeordnet sind. Jede der Führungen 42 hat einen zur Achse A parallelen Bolzen 44, der mit einer Schraube 46 an einem Ansatz 48 des Schlittens 20 befestigt ist und mit radialem Spiel in eine Führungsbohrung 50 in einem rohrförmigen achsparallelen Vorsprung 52 des Bremsträgers 10 eingreift. Jede der beiden Führungsbohrungen 50 hat, wie besonders aus Fig. 4 und 5 ersichtlich ist, einen engen zylindrischen Abschnitt 54, der dem zugehörigen Ansatz 48 benachbart ist und den zugehörigen Bolzen 44 mit einem rundum gleichgroßen radialen Spiel S54 von 0,1 bis 0,2 mm, vorzugsweise 0,15 mm umschließt. Der enge Abschnitt 54 ist durch eine Ringnut 56 von einem ebenfalls kreiszylindrischen erweiterten Abschnitt 58 getrennt, in dem der zugehörige Bolzen 44 ein allseits gleichgroßes radiales Spiel S58 hat, das doppelt so groß ist wie das Spiel S54.

In der Ringnut 56 ist eine elastische Ringstütze 60 in Gestalt eines zylindrischen Rings 60 aufgenommen, der aus Gummi oder einem Elastomeren besteht, und in dem der zugehörige Bolzen 44 spielfrei geführt ist. Die Ringstütze 60 hat eine axiale Breite b, die ungefähr 45% ihres Innendurchmessers beträgt und eine radiale Dicke c von etwa 70% der axialen Breite b. Von besonderer Bedeutung ist, daß jede der beiden elastischen Ringstützen 60 mindestens annähernd symmetrisch in bezug auf eine Ebene N (Fig. 3) angeordnet ist, die den Gesamtschwerpunkt O der Baugruppe enthält, die aus dem Schlitten 20, dem Schwimmsattel 30 und den beiden Bremsbacken 24 und 40 besteht.

Beide Führungen 42 haben je eine Manschette 62, die das am zugehörigen Ansatz 48 befestigte Ende des Bolzens 44 mit dem benachbarten Ende des zugehörigen rohrförmigen Vorsprungs 52 dicht verbindet. Das entgegengesetzte Ende der Führungsbohrung 50 jeder der beiden Führungen 42 ist mit einem Deckel 64 dicht verschlossen.

Die beiden Führungen 42 unterscheiden sich voneinander dadurch, daß der Bolzen 44 der in Fig. 4 dargestellten einlaufseitigen Führung hohl und von der zugehörigen Schraube 46 vollständig durchsetzt ist, während der in Fig. 5 dargestellte Bolzen 44 der auslaufseitigen Führung massiv ist und mit der zugehörigen Schraube 46 aus einem Stück besteht. Die in Fig. 4 abgebildete Gestaltung der einlaufseitigen Führung 42 hat den Vorteil, daß der Bolzen 44 innerhalb eines radialen Spiels S44, das er gegenüber der zugehörigen Schraube 46 hat, zur Auslaufseite hin oder von dieser weg versetzt festgeklemmt werden kann, um Abstandstoleranzen zwischen den beiden Führungsbohrungen 50 auszugleichen.

Axial außerhalb der Bremsscheibe 16 ist am Bremsträger 10 ein zweites Paar Führungen 66 angeordnet, die je einen zur Mittelebene M normalen Stift 68 aufweisen. Die Stifte 68 sind miteinander fluchtend in je einen der radialen Schenkel 18 des Bremsträgers 10 eingeschraubt und haben je ein halbkugelförmiges Ende 70, das in eine zur Achse A parallele Nut 72 je eines Führungskörpers 74 eingreift. Die beiden Führungskörper 74 sind mit je einem Zapfen 76 in je einer zur Mittelebene M normalen Bohrung 78 im Schenkel 38 des Schwimmsattels 30 befestigt.

Jeder der beiden Führungskörper 74 ist durch eine gegen den zugehörigen Stift 68 abdichtende elastische Manschette 80 gegen Verschmutzung geschützt. Den Manschetten 80 ist zum Schutz gegen Wärmestrahlung je ein Schild 82 aus Blech zugeordnet.

## Patentansprüche

1. Teilbelag-Scheibenbremse für Kraftfahrzeuge mit
- einem Bremsträger (10), der einen Rand einer Bremsscheibe (16) umgreift,
- einem Schlitten (20), der an einer ersten Seite der Bremsscheibe (16) mittels eines ersten Paars Führungen (42) in Achsrichtung der Bremsscheibe (16) verschiebbar am Bremsträger (10) geführt ist und ein erstes Teil (22) einer hydraulischen Betätigungsvorrichtung (22, 32) trägt,
- einem Schwimmsattel (30), der die Bremsscheibe (16) und den Schlitten (20) übergreift, auf der ersten Seite der Bremsscheibe (16) mittels eines zweiten Teils (32) der Betätigungsvorrichtung (22, 32) an deren erstem Teil (22) in Achsrichtung der Bremsscheibe (16) verschiebbar geführt ist und an der vom Schlitten abgewandten, zweiten Seite der Bremsscheibe mittels eines zweiten Paars Führungen (66) am Bremsträger (10) verschiebbar geführt ist,
- einer ersten Bremsbacke (24), die am Schlitten (20) befestigt ist und durch dessen Verschiebung an die erste Seite der Bremsscheibe (16) anpreßbar ist, sowie
- einer zweiten Bremsbacke (40), die am Schwimmsattel (30) befestigt ist und durch dessen Verschiebung an die zweite Seite der Bremsscheibe (16) anpreßbar ist,
- wobei die Führungen (66) des zweiten Paars je einen Stift (68) aufweisen, der sich quer zur Achsrichtung der Bremsscheibe (16) erstreckt und in eine in Achsrichtung der Bremsscheibe (16) verlaufende Nut (72) eingreift,
dadurch **gekennzeichnet,** daß das erste Paar Führungen (42) zwei Bolzen (44) aufweist, die sich in Achsrichtung der Bremsscheibe (16) erstrecken, mit radialem Spiel in je eine Führungsbohrung (50) eingreifen und in dieser durch je eine Ringstütze (60) aus elastischem Werkstoff zentriert sind, deren axiale Breite (b) nicht größer als der Durchmesser (d) des zugehörigen Bolzens (44) ist.

2. Teilbelag-Scheibenbremse nach Anspruch 1,
dadurch **gekennzeichnet,** daß die Ringstützen (60) des ersten Paars Führungen (42) mindestens annähernd in derselben zur Achse (A) der Bremsscheibe (16) normalen Ebene (N) liegen wie der Gesamtschwerpunkt (O) der von dem Schlitten (20), Schwimmsattel (30) und den beiden Bremsbacken (24, 40) gebildeten Baugruppe.

3. Teilbelag-Scheibenbremse nach Anspruch 1 oder 2,
dadurch **gekennzeichnet,** daß die Bolzen (44) des ersten Paars Führungen (42) am Schlitten (20) befestigt sind und die zugehörigen Führungsbohrungen (50) am Bremsträger (10) ausgebildet sind und Ringnuten (56) aufweisen, in denen die Ringstützen (60) aufgenommen sind.

4. Teilbelag-Scheibenbremse nach einem der Ansprüche 1 bis 3,
dadurch **gekennzeichnet,** daß die Ringstützen (60) des ersten Paars Führungen (42) zylindrisch sind und eine axiale Breite (b) haben, die 40 bis 50% des Durchmessers des zugehörigen Bolzens (44) beträgt.

5. Teilbelag-Scheibenbremse nach einem der Ansprüche 1 bis 4,
dadurch **gekennzeichnet,** daß die Ringstützen (60) des ersten Paars Führungen (42) eine radiale Dicke (c) haben, die 60 bis 80% ihrer maximalen Breite (b) beträgt.

6. Teilbelag-Scheibenbremse nach Anspruch 4 oder 5,
dadurch **gekennzeichnet,** daß mindestens eine der Ringstützen (60) aus mindestens zwei schmalen Ringen zusammengesetzt ist, die mit axialen Zwischenräumen nebeneinander angeordnet sind.

7. Teilbelag-Scheibenbremse nach einem der Ansprüche 1 bis 6,
dadurch **gekennzeichnet,** daß die Ringstützen (60) bei Belastung durch Bremskräfte mindestens annähernd die gleiche Kraft-Weg-Charakteristik haben wie der Bremsträger (10) im Bereich jeder der Führungen (66) des zweiten Paars.

8. Teilbelag-Scheibenbremse nach einem der Ansprüche 1 bis 7,
dadurch **gekennzeichnet,** daß die Führungsbohrungen (50) des ersten Paars Führungen (42) je einen engen Abschnitt (54) haben, der sich von der zugehörigen elastischen Ringstütze (60) in Richtung zur Bremsscheibe (16) erstreckt und bei Überschreiten einer vorbestimmten normalen Bremskraft eine Anlagefläche für den zugehörigen Bolzen (44) bildet.

9. Teilbelag-Scheibenbremse nach einem der Ansprüche 1 bis 8,
dadurch **gekennzeichnet,** daß die Führungen (42, 66) sowie die Bremsbacken (24, 40) symmetrisch in bezug auf eine die Achse (A) der Bremsscheibe (16) enthaltende Mittelebene (M) angeordnet sind und die Betätigungsvorrichtung (22, 32) gegen die Mittelebene (M) in der Betriebsdrehrichtung (B) der Bremsscheibe (16) zur Auslaufseite der Bremse versetzt ist.

## Claims

1. A spot-type disc brake for motor vehicles, comprising
- a brake carrier member (10) which embraces an edge of a brake disc (16),
- a slide member (20) which is guided at the carrier member (10), at a first side of the brake disc (16), by a first pair of guide means (42) so as to be displaceable in axial direction of the brake disc (16) and which carries a first part (22) of an hydraulic actuating device (22, 32),
- a floating caliper (30) which straddles the brake disc (16) and the slide member (20) and which is guided at the first part (22) of the actuating device (22, 32), at the first side of the brake disc (16), by means of a second part (32) of said device so as to be displaceable in axial direction of the brake disc (16) and further guided at the second side of the brake disc (16), remote from the slide member, by means of a second pair of guide means (66) so as to be displaceable at the brake carrier member (10),
- a first brake pad (24) fixed to the slide member (20) and adapted to be pressed against the first side of the brake disc (16) by displacement of the slide member, and
- a second brake pad (40) fixed to the floating caliper (30) and adapted to be pressed against the second side of the brake disc (16) by displacement of the floating caliper,
- the guide means (66) of the second pair each comprising a pin (68) which is oriented transversely of the axial direction of the brake disc (16) and engages in a groove (72) extending in axial direction of the brake disc (16), **characterized** in that the first pair of guide means (42) comprises two bolts (44) extending in axial direction of the brake disc (16), engaging with radial clearance in a guide bore (50) each and being centered in the same by an annular prop (60) each, made of elastic material, whose axial width (b) is no greater than the diameter (d) of the corresponding bolt (44).

2. The spot-type disc brake as claimed in claim 1, characterized in that the annular props (60) of the first pair of guide means (42) lie at least approximately in the same plane (N) at right angles to the axis (A) of the brake disc (16) as does the overall center of gravity (O) of the assembly composed of the slide member (20), the floating caliper (30), and the two brake pads (24, 40).

3. The spot-type disc brake as claimed in claim 1 or 2, characterized in that the bolts (44) of the first pair of guide means (42) are fastened to the slide member (20) and the corresponding guide bores (50) are formed in the brake carrier member (10) and include annular grooves (56) to receive the annular props (60).

4. The spot-type disc brake as claimed in any one of claims 1 to 3, characterized in that the annular props (60) of the first pair of guide means (42) are cylindrical and have an axial width (b) which corresponds to from 40 to 50% of the diameter of the corresponding bolt (44).

5. The spot-type disc brake as claimed in any one of claims 1 to 4, characterized in that the annular props (60) of the first pair of guide means (42) have a radial thickness (c) which corresponds to from 60 to 80% of their maximum width (b).

6. The spot-type disc brake as claimed in claim 4 or 5, characterized in that at least one of the annular props (60) is composed of at least two narrow rings arranged side by side with axial spacings in between.

7. The spot-type disc brake as claimed in any one of claims 1 to 6, characterized in that the annular props (60), when loaded by braking forces, have at least approximately the same force-path characteristic as the brake carrier member (10) in the area of each of the guide means (66) of the second pair.

8. The spot-type disc brake as claimed in any one of claims 1 to 7, characterized in that the guide bores (50) of the first pair of guide means (42) each have a narrow section (54) extending from the respective elastic annular prop (60) in the direction toward the brake disc (16) and presenting an engagement surface for the corresponding bolt (44) when a predetermined normal braking force is exceeded.

9. The spot-type disc brake as claimed in any one of claims 1 to 8, characterized in that the guide means (42, 66) as well as the brake pads (24, 40) are disposed symmetrically with respect to a center plane (M) in which lies the axis (A) of the brake disc (16), while the actuating device (22, 32) is offset with respect to the center plane (M) in the operating direction of rotation (B) of the brake disc (16) toward the trailing side of the brake.

## Revendications

1. Frein à disque à garniture partielle pour véhicules automobiles, comportant :
- un support de frein (10), qui entoure un bord d'un disque de frein (16),
- un chariot (20), qui est guidé sur le support de frein (10), sur un premier côté du disque de frein (16), au moyen d'une première paire de guides (42) de façon à pouvoir se déplacer en translation dans la direction axiale du disque de frein (16), et qui porte une première partie (22) d'un dispositif d'actionnement hydraulique (22,32),
- un étrier flottant (30), qui entoure le disque de frein (16) et le chariot (20), qui est guidé, sur le premier côté du disque de frein (16), au moyen d'une seconde partie (32) du dispositif d'actionnement (22,32) de façon à pouvoir se déplacer en translation sur la première partie (22) de ce dernier dans la direction axiale du disque de frein (16) et qui est guidé en translation, sur le support de frein (10), sur le second côté du disque de frein qui est opposé au chariot, au moyen d'une seconde paire de guides (66),
- une première mâchoire de frein (24), qui est fixée sur le chariot (20) et qui peut être appliquée au cours de sa translation contre le premier côté du disque de frein (16),
- ainsi qu'une seconde mâchoire de frein (40), qui est fixée sur l'étrier flottant (30) et qui peut être appliquée au cours de sa translation contre le second côté du disque de frein (16),
- les guides (66) de la seconde paire comportant chacun une goupille (68), qui est orientée perpendiculairement à la direction axiale du disque de frein (16) et qui est engagée dans une rainure (72) orientée dans la direction axiale du disque de frein (16),
- caractérisé en ce que la première paire de guides (42) comprend deux broches (44), qui sont orientées dans la direction axiale du disque de frein (16), qui sont engagées avec un jeu radial dans un trou de guidage respectif (50) et qui sont centrées dans celui-ci par un ressort annulaire respectif (60) formé d'un matériau élastique, et dont la largeur axiale (b) n'est pas plus grande que le diamètre (d) de la broche associée (44).

2. Frein à disque à garniture partielle selon la revendication 1, caractérisé en ce que les supports annulaires (60) de la première paire de guides (42) sont situés au moins approximativement dans le même plan (N), perpendiculaire à l'axe (A) du disque de frein (16), que le centre de gravité général (O) de l'ensemble constitué par le chariot (20), l'étrier flottant (30) et les deux mâchoires de frein (24, 40).

3. Frein à disque à garniture partielle selon une des revendications 1 ou 2, caractérisé en ce que les broches (44) de la première paire de guides (42) sont fixées sur le chariot (20) et les trous de guidage associés (50) sont formés dans le support de frein (10) et comportent des rainures annulaires (56) dans lesquelles sont reçus les supports annulaires (60).

4. Frein à disque à garniture partielle selon une des revendications 1 à 3, caractérisé en ce que les supports annulaires (60) de la première paire de guides (42) sont cylindriques et ont une largeur axiale (b) qui est comprise entre 40 et 50% du diamètre de la broche associée (44).

5. Frein à disque à garniture partielle selon une des revendications 1 à 4, caractérisé en ce que les supports annulaires (60) de la première paire de guides (42) ont une épaisseur radiale (c) qui est comprise entre 60 et 80% de leur largeur maximale.

6. Frein à disque à garniture partielle selon une des revendications 4 ou 5, caractérisé en ce qu'au moins un des supports annulaires (60) est composé d'au moins deux rondelles étroites, qui sont disposées l'une à côté de l'autre en étant espacées axialement d'un intervalle intercalaire.

7. Frein à disque à garniture partielle selon une des revendications 1 à 6, caractérisé en ce que les supports annulaires (60) ont, lors d'une sollicitation par les forces de freinage, au moins approximativement la même caractéristique force-course que le support de frein (10) dans la zone de chacun des guides (66) de la seconde paire.

8. Frein à disque à garniture partielle selon une des revendications 1 à 7, caractérisé en ce que les trous de guidage (50) de la première paire de guides (42) comportent chacun une partie étroite (54), qui s'étend depuis le support annulaire élastique associé (60) en direction du disque de frein (16) et qui constitue, lors du dépassement d'une force de freinage normale prédéterminée, une surface d'appui pour la broche associée (44).

9. Frein à disque à garniture partielle selon une des revendications 1 à 8, caractérisé en ce que les guides (42, 66) ainsi que les mâchoires de frein (24, 40) sont disposés symétriquement par rapport à un plan central (M) contenant l'axe (A) du disque de frein (16) et le dispositif d'actionnement (22, 32) est décalé par rapport au plan central (M) dans le sens de rotation en marche (B) du disque de frein (16) vers le côté de sortie du frein.
